# EUROPEAN PATENT APPLICATION

(11) **EP 4 459 728 A1**
(43) Date of publication of application: **06.11.2024**
(21) Application number: 22915462.0
(22) Date of filing: 14.10.2022
(51) Int. Cl.: H01M 10/052, H01M 4/13, H01M 4/134, H01M 4/36, H01M 4/38, H01M 4/48, H01M 10/0567

(54) **NONAQUEOUS ELECTROLYTE SECONDARY BATTERY**

(30) Priority: 27.12.2021 JP 2021212572
(71) Applicant: Panasonic Intellectual Property Management Co., Ltd., Osaka-shi, Osaka 540-6207 (JP)
(72) Inventor: ZHONG, Yuanlong, Kadoma-shi, Osaka 571-0057 (JP); NISHITANI, Satoshi, Kadoma-shi, Osaka 571-0057 (JP)
(74) Representative: Eisenführ Speiser
(86) International application number: PCT/JP2022/038408
(87) International publication number: WO 2023/127227

(57) **Abstract**

Disclosed is a non-aqueous electrolyte secondary battery including: a negative electrode that includes a negative electrode active material; a separator; a positive electrode that is provided to oppose the negative electrode with the separator interposed therebetween; and a non-aqueous electrolyte. The negative electrode active material includes 3 mass% or more of a silicon-containing material. The silicon-containing material includes carbon composite particles. Each of the carbon composite particles includes a carbon phase and a silicon phase dispersed in the carbon phase. The non-aqueous electrolyte contains a 5- or 6-membered sulfur-containing cyclic ester compound that has a carbon-carbon unsaturated bond and a structure represented by -O-S(= O)n-O-, where n is 1 or 2.

## Description

### [Technical Field]

The present disclosure relates to a non-aqueous electrolyte secondary battery.

### [Background Art]

A non-aqueous electrolyte secondary battery as typified by a lithium ion secondary battery includes a positive electrode, a negative electrode, and a non-aqueous electrolyte. The non-aqueous electrolyte contains a solute such as a lithium salt, a non-aqueous solvent, an additive, and the like, and is mainly used in the form of a liquid. The negative electrode includes a negative electrode material mixture that contains a negative electrode active material. As the negative electrode active material, a material capable of electrochemically absorbing and desorbing lithium ions is used. As the material capable of electrochemically absorbing and desorbing lithium ions, for example, a carbonaceous material, a silicon-containing material, or the like is used.

Patent Literature 1 proposes a lithium ion secondary battery that includes a negative electrode that contains graphite and a positive electrode that contains LiCoO₂, wherein an electrolyte solution obtained by dissolving LiPF₆ in a mixture of ethylene carbonate and ethyl methyl carbonate and further adding vinylene carbonate and 4-vinyl ethylene sulfite is used.

Patent Literature 2 proposes a non-aqueous electrolyte secondary battery that includes: a negative electrode that contains a silicon material and a carbon material; and a positive electrode that contains LiNi_{0.88}Co_{0.09}Al_{0.03}O₂, wherein a non-aqueous electrolyte solution obtained by adding ethylene sulfite and vinylene carbonate to a mixed non-aqueous solvent of ethylene carbonate and dimethyl carbonate, and dissolving LiPF₆ is used.

### [Citation List]

### [Patent Literatures]

[PTL 1] Japanese Laid-Open Patent Publication No. 2005-166553 (Examples)
[PTL2] WO 2021/117549 (Examples)

### [Summary of Invention]

### [Technical Problem]

Silicon-containing materials undergo a large volume change during absorbing and desorbing lithium ions, as compared with carbonaceous negative electrode active materials such as graphite. In particular, carbon composite particles each including a carbon phase and a silicon phase dispersed in the carbon phase undergo a very large volume change because the carbon composite particles have a large discharge capacity and a high active material utilization rate. For this reason, each time charge and discharge are repeated, it is likely that the carbon composite particles are broken and new surfaces are formed. In a new surface, a side reaction with the non-aqueous electrolyte is likely to take place, and the capacity decreases during repetition of charge and discharge, as a result of which the capacity retention rate decreases, and the cycle characteristics decrease. In particular, even when the capacity retention rate decreases less at a temperature around room temperature, the capacity retention rate decreases remarkably at a temperature (for example, a temperature higher than or equal to 40°C) higher than room temperature (for example, 20°C or more and 35°C or less). Also, in the case where a negative electrode that includes the carbon composite particles is used, gas generation is more remarkable when the non-aqueous electrolyte secondary battery is stored at a temperature (for example, a temperature higher than or equal to 40°C) higher than room temperature, as compared with the case where a carbonaceous negative electrode active material such as graphite is used.

### [Solution to Problem]

One aspect of the present disclosure relates to a non-aqueous electrolyte secondary battery including: a negative electrode that includes a negative electrode active material; a separator; a positive electrode that is provided to oppose the negative electrode with the separator interposed therebetween; and a non-aqueous electrolyte, wherein
the negative electrode active material includes 3 mass% or more of a silicon-containing material,
the silicon-containing material includes carbon composite particles,
each of the carbon composite particles includes a carbon phase and a silicon phase dispersed in the carbon phase,
the non-aqueous electrolyte contains a 5- or 6-membered sulfur-containing cyclic ester compound that has a carbon-carbon unsaturated bond and a structure represented by -O-S(= O)n-O-, and
n is 1 or 2.

### [Advantageous Effects of Invention]

In a non-aqueous electrolyte secondary battery that includes a negative electrode that includes carbon composite particles each including a silicon phase, the decrease in capacity when charge and discharge are repeated at a temperature higher than room temperature can be suppressed, and the amount of gas generated when the non-aqueous electrolyte secondary battery is stored at a temperature higher than room temperature can be reduced.

### [Brief Description of Drawing]

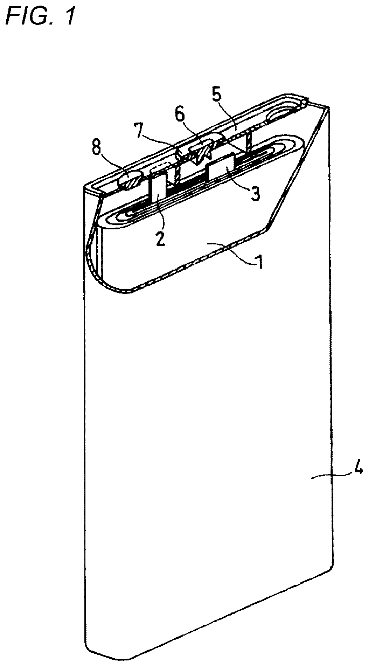

[FIG 1] Fig. 1 is a partially cutaway perspective view of a non-aqueous electrolyte secondary battery according to an embodiment of the present disclosure.

### [Description of Embodiment]

Novel features of the present invention are set forth in the appended claims. However, the present invention will be well understood from the following detailed description of the present invention with reference to the drawings, in terms of both the configuration and the content together with other objects and features of the present invention.

In a non-aqueous electrolyte secondary battery, a carbonaceous material such as graphite is typically used as a negative electrode active material. When a silicon-containing material is used, theoretically, it is possible to obtain a capacity higher than that obtained when a carbonaceous material is used. However, the volume change during absorbing and desorbing lithium ions is large, and it is likely that the active material particles are broken and new surfaces are formed. In a new surface, a side reaction with a non-aqueous electrolyte is likely to take place, and the capacity decreases. For this reason, even if a silicon-containing material is used, the capacity retention rate during repetition of charge and discharge decreases, and it is therefore difficult to ensure a sufficient service life. In particular, it is ideal to use carbon composite particles each including a carbon phase and a silicon phase dispersed in the carbon phase from the viewpoint of obtaining a high capacity, especially because a high active material utilization rate and a large discharge capacity can be obtained. However, when charge and discharge are repeated, due to the volume change of the silicon phase, not only the silicon phase but also the carbon phase that constitutes a matrix is also likely to be broken. For this reason, in the case where carbon composite particles each including a silicon phase are used, more new surfaces are formed as compared with the case where a carbonaceous material that does not include a silicon phase is used. Accordingly, when charge and discharge are repeated, the capacity retention rate decreases, and the cycle characteristics are likely to decrease.

Side reactions that take place in the negative electrode may be reduced by using a non-aqueous electrolyte that contains an additive that can form a protection coating film on the negative electrode surface. For example, when a non-aqueous electrolyte that contains a fluorine-containing cyclic carbonate, ethylene sulfite, vinyl ethylene carbonate, or the like is used, these components undergo reductive decomposition on the negative electrode surface, and thus a protection coating film is likely to be formed. However, the protection coating film derived from any of these components has low thermal stability or low ion conductivity at a high resistance. With the protection coating film that has low thermal stability, when the non-aqueous electrolyte secondary battery is repeatedly charged and discharged or stored for a long period of time at a temperature (for example, a temperature higher than or equal to 40°C) higher than room temperature, decomposition of the protection coating film or an increase of side reactions that take place in new surfaces is likely to occur. As a result, a large amount of gas is generated, or the capacity decreases during repetition of charge and discharge.

In view of the above, (1) a non-aqueous electrolyte secondary battery according to one aspect of the present disclosure includes: a negative electrode that includes a negative electrode active material; a separator; a positive electrode that is provided to oppose the negative electrode with the separator interposed therebetween; and a non-aqueous electrolyte. The negative electrode active material includes 3 mass% or more of a silicon-containing material. The silicon-containing material includes carbon composite particles. Each of the carbon composite particles includes a carbon phase and a silicon phase dispersed in the carbon phase. The non-aqueous electrolyte contains a 5- or 6-membered sulfur-containing cyclic ester compound that has a carbon-carbon unsaturated bond and a structure represented by -O-S(= O)n-O-, where n is 1 or 2. Hereinafter, the sulfur-containing cyclic ester compound may also be referred to as "first component". The silicon-containing material may also be referred to as "Si-containing material", and the silicon phase may also be referred to as "Si phase".

In the case where the negative electrode includes only graphite particles as the negative electrode active material, and does not include carbon composite particles each including a Si phase, a high capacity retention rate (for example, 90% or more) during repetition of charge and discharge can be obtained irrespective of room temperature (for example, 25°C) or a temperature (for example, 45°C) higher than room temperature. In contrast thereto, in the case where the negative electrode includes carbon composite particles each including a Si phase as the negative electrode active material, it is possible to obtain an initial capacity higher than that obtained in the case where the negative electrode includes only graphite particles as the negative electrode active material. However, the capacity retention rate during repetition of charge and discharge is low at both 25°C and 45°C. The reason is considered to be that, as described above, the carbon composite particles each including a Si phase undergo a volume change larger than that of graphite and thus more new surfaces are formed. In the present disclosure, a negative electrode that includes carbon composite particles each including a Si phase is used in combination with a non-aqueous electrolyte that contains a first component. With this configuration, it is possible to suppress the decrease in capacity when charge and discharge are repeated at a temperature (for example, 45°C) higher than room temperature. Accordingly, despite the fact that the negative electrode that includes carbon composite particles each including a Si phase is used, it is possible to ensure a relatively high capacity retention rate. Also, by using a negative electrode that includes carbon composite particles each including a Si phase in combination with a non-aqueous electrolyte that contains a first component, it is possible to reduce the amount of gas generated when the non-aqueous electrolyte secondary battery is stored at a temperature higher than room temperature. For example, the amount of gas generated tends to increase as the battery storage temperature increases. For example, the amount of gas generated when the non-aqueous electrolyte secondary battery is stored at a temperature of 80°C for a long period of time (for example, for 40 hours or more or 60 hours or more) can be reduced significantly. The reason is considered to be that, due to the first component, a highly ion conductive protection coating film is formed on the negative electrode surface from an early stage, and thus side reactions on the negative electrode surface involving components contained in the non-aqueous electrolyte such as a non-aqueous solvent and an additive are reduced while ensuring a relatively high capacity.

(2) In the non-aqueous electrolyte secondary battery in accordance with the feature (1) described above, the silicon-containing material may further include a silicon oxide.

(3) In the non-aqueous electrolyte secondary battery in accordance with the feature (1) or (2) described above, the sulfur-containing cyclic ester compound may have at least one selected from the group consisting of a substituent that has the carbon-carbon unsaturated bond and the carbon-carbon unsaturated bond that constitutes a ring.

(4) In the non-aqueous electrolyte secondary battery in accordance with any one of the features (1) to (3) described above, the sulfur-containing cyclic ester compound may include at least one selected from the group consisting of a vinyl ethylene sulfite compound, an allyl ethylene sulfite compound, and a vinylene sulfate compound.

(5) In the non-aqueous electrolyte secondary battery in accordance with any one of the features (1) to (4) described above, the concentration of the sulfur-containing cyclic ester compound in the non-aqueous electrolyte may be 5 mass% or less.

(6) In the non-aqueous electrolyte secondary battery in accordance with any one of the features (1) to (5) described above, the non-aqueous electrolyte may further contain a fluorine-containing cyclic carbonate.

(7) In the non-aqueous electrolyte secondary in accordance with the feature (6) described above, the mass ratio (= fluorine-containing cyclic carbonate/sulfur-containing cyclic ester compound) of the fluorine-containing cyclic carbonate to the sulfur-containing cyclic ester compound may be 20 or less.

(8) In the non-aqueous electrolyte secondary in accordance with the feature (6) or (7) described above, the fluorine-containing cyclic carbonate may include fluoroethylene carbonate.

(9) In the non-aqueous electrolyte secondary battery in accordance with any one of the features (6) to (8) described above, the concentration of the fluorine-containing cyclic carbonate in the non-aqueous electrolyte may be 10 mass% or less.

(10) In the non-aqueous electrolyte secondary battery in accordance with any one of the features (6) to (9) described above, the concentration of the fluorine-containing cyclic carbonate in the non-aqueous electrolyte may be 0.01 mass% or more.

In the specification of the present application, the term "room temperature" refers to a temperature of 20°C or more and 35°C or less. The term "a temperature higher than room temperature" refers to a temperature higher than 35°C, and may be 40°C or more. In the specification of the present application, a capacity change (or capacity retention rate) during repetition of charge and discharge at room temperature is evaluated at 25°C as an example of the room temperature. A capacity change (or capacity retention rate) during repetition of charge and discharge at a temperature higher than room temperature is evaluated at 45°C as an example of the temperature higher than room temperature. During long-term storage of a non-aqueous electrolyte secondary battery, a decrease in capacity and gas generation tend to occur as side reactions gradually proceed. When a non-aqueous electrolyte secondary battery is stored at a high temperature for a long period of time, side reaction proceeds remarkably, and thus the amount of gas generated is likely to increase. For this reason, in the specification of the present application, the amount of gas generated when a non-aqueous electrolyte secondary battery is stored at a temperature higher than room temperature is evaluated for the non-aqueous electrolyte secondary battery that has been stored at a high temperature (for example, 80°C) for a long period of time (for example, for 72 hours) as an accelerated aging condition.

In the case where the non-aqueous electrolyte contains, for example, a fluorine-containing cyclic carbonate, the capacity retention rate during repetition of charge and discharge at 25°C tends to increase as the initial fluorine-containing cyclic carbonate concentration increases. The reason is considered to be that, even when new surfaces are formed as a result of the Si-containing material including the carbon composite particles being broken during charge and discharge, a protection coating film derived from the fluorine-containing cyclic carbonate is formed on the negative electrode surface, and thus side reactions are suppressed. However, the amount of gas generated during high temperature storage increases significantly as the initial fluorine-containing cyclic carbonate concentration increases. The reason is considered to be that the protection coating film derived from the fluorine-containing cyclic carbonate has low thermal stability, and thus the protection coating film undergoes decomposition during high temperature storage, and, in addition to being converted to gas, the effect of protecting the negative electrode surface decreases, and the gas generation due to side reactions also increases. In addition, in the case where the non-aqueous electrolyte secondary battery is repeatedly charged and discharged at 45°C, the capacity retention rate tends to decrease as the initial fluorine-containing cyclic carbonate concentration increases unlike the case where the non-aqueous electrolyte secondary battery is repeatedly charged and discharged at 25°C. The reason is considered to be that, in the case where the non-aqueous electrolyte secondary battery is repeatedly charged and discharged at 45°C, even when a protection coating film derived from the fluorine-containing cyclic carbonate is formed, the protection coating film undergoes decomposition, and thus new surfaces that are formed as a result of the carbon composite particles each including a Si phase being broken during charge and discharge are not sufficiently protected by the protection coating film, and thus side reactions increase. It is considered that the first component used in the present disclosure has a low energy level of the lowest unoccupied molecular orbital (LUMO) that is lower than that of the fluorine-containing cyclic carbonate, and thus the first component is reduced more rapidly than the fluorine-containing cyclic carbonate and forms a protection coating film on the negative electrode surface. For this reason, it is considered that, as a result of the first component preferentially forming a stable coating film on the negative electrode to reduce contact between the fluorine-containing cyclic carbonate and the new surfaces of the active material particles, formation of a coating film that is derived from the fluorine-containing cyclic carbonate and has low thermal stability is reduced, and even when the non-aqueous electrolyte secondary battery is exposed to a temperature higher than room temperature, the decrease in capacity and the gas generation are reduced. The advantageous effects obtained by using the first component are very remarkable particularly when the concentration of the fluorine-containing cyclic carbonate in the non-aqueous electrolyte is greater than 1 mass% (preferably, 1.5 mass% or more, 2 mass% or more, or 3 mass% or more), and the effect of suppressing the reduction in the capacity retention rate when charge and discharge are repeated at a temperature higher than room temperature is enhanced, and thus the amount of gas generated during high temperature storage can be reduced significantly.

Hereinafter, the constituent elements of the non-aqueous electrolyte secondary battery according to the present disclosure will be more specifically described one by one including the features (1) to (10) described above. At least one of the features (1) to (10) described above and at least one of the elements described below may be combined as long as there is no technical contradiction.

### (Negative Electrode)

The negative electrode includes a negative electrode active material. The negative electrode may include a negative electrode material mixture that includes at least a negative electrode active material and a negative electrode current collector that holds the negative electrode material mixture. The negative electrode usually includes a negative electrode material mixture in the form of a layer (hereinafter referred to as "negative electrode material mixture layer"). The negative electrode material mixture may further include at least one selected from the group consisting of a binder and a thickener, and the like. The negative electrode material mixture may further include a conductive agent and the like.

### (Negative Electrode Material Mixture)

### (Negative Electrode Active Material)

The negative electrode active material includes at least a Si-containing material. The Si-containing material includes at least the above-described carbon composite particles. The negative electrode may include, as the negative electrode active material, a material other than the Si-containing material.

### (Si-Containing Material)

Each of the carbon composite particles included in the Si-containing material includes a carbon phase and a Si phase dispersed in the carbon phase. The carbon phase is electron conductive. Accordingly, even when the carbon composite particles are cracked due to expansion and contraction of the Si phase, the carbon phase is unlikely to be isolated, and it is therefore likely to maintain contact points between the carbon composite particles and their surroundings. Accordingly, the reduction in the cycle characteristics is likely to be suppressed.

The carbon phase may be made of, for example, shapeless carbon (or in other words, amorphous carbon) or crystalline carbon. The shapeless carbon may be, for example, hard carbon, soft carbon, or any other carbon. As used herein, the term "shapeless carbon" generally refers to a carbonaceous material that has an average interplanar spacing d002 of the (002) plane measured using X-ray diffractometry of greater than 0.340 nm. As the crystalline carbon, carbon that has a graphite-type crystal structure such as graphite may be used. The term "crystalline carbon" such as graphite refers to a carbonaceous material that has an average interplanar spacing d002 of the (002) plane of 0.340 nm or less (for example, 0.3354 nm or more and 0.340 nm or less).

The content of the Si phase in the carbon composite particles is, for example, 30 mass% or more and 80 mass% or less, and may be 40 mass% or more and 70 mass% or less. When the content of the Si phase is within the above-described range, a higher initial capacity can be obtained, and the reduction in the cycle characteristics is likely to be reduced. Also, by including the carbon phase in a relatively large amount, even when the carbon composite particles are broken due to charge and discharge, the carbon phase can easily enter into voids formed as a result of the carbon composite particles being broken, and thus the conductive paths in the negative electrode material mixture are likely to be maintained.

The content of the carbon composite particles in the negative electrode active material may be, for example, 3 mass% or more, 4 mass% or more, or 5 mass% or more. When the content of the carbon composite particles is within the above-described range, due to the volume change during absorbing and desorbing lithium ions, the influence of side reactions in the new surfaces is likely to appear. For this reason, the advantageous effects obtained by using the non-aqueous electrolyte that contains the first component are likely to appear remarkably. From the viewpoint of ensuring higher cycle characteristics, the content of the carbon composite particles in the negative electrode active material is, for example, 10 mass% or less.

The carbon composite particles can be obtained by, for example, pulverizing a mixture of a carbon source and a raw silicon material into fine particles while stirring the mixture using a ball mill or the like, and then subjecting the mixture to heat treatment in an inert atmosphere. Examples of the carbon source that may be used include: petroleum resins such as coal tar pitch, petroleum pitch, and tar: saccharides or water soluble resins such as carboxymethyl cellulose (CMC), polyvinyl pyrrolidone, cellulose, and sucrose. When mixing a carbon source and a raw silicon material, for example, the carbon source and the raw silicon material may be dispersed in a dispersion medium such as an alcohol. After the mixture that has undergone milling is dried, the mixture is heated at a temperature of, for example, 600°C or more and 1000°C or less in an inert gas atmosphere to carbonize the carbon source. In this way, the carbon phase is formed.

Examples of the Si-containing material other than the carbon composite particles include a simple substance of silicon, a silicon alloy, and a silicon compound.

The Si-containing material may include composite particles other than the carbon composite particles. Examples of the composite particles include composite particles in each of which a Si phase (fine Si phase) is dispersed in a lithium ion conducting phase (matrix). In the case where the Si-containing material includes the above-described composite particles, an even higher capacity can be obtained, and the effect of suppressing the reduction in the cycle characteristics can be enhanced.

The lithium ion conducting phase preferably has at least one selected from the group consisting of a SiO₂ phase and a silicate phase. The lithium ion conducting phase may further has a carbon phase. The lithium ion conducting phase can form an amorphous phase. However, the configuration is not limited thereto. For example, at least a portion of each of the silicate phase and the carbon phase may be a crystalline phase that includes a crystalline silicate, crystalline carbon as described in the description of the carbon composite particles, or the like. Specific examples of the composite particles include: composite particles each including a SiO₂ phase and a Si phase dispersed in the SiO₂ phase; and composite particles (silicate composite particles) each including a silicate phase and a Si phase dispersed in the silicate phase. However, the composite particles are not limited to the specific examples described above.

The SiO₂ phase is an amorphous phase that includes 95 mass% or more of silicon dioxide. Composite particles in each of which a Si phase is dispersed in a SiO₂ phase are represented by SiOₓ, where x may be, for example, 0.5 ≤ x < 2, or 0.8 ≤ x ≤ 1.6. SiOₓ can be obtained by, for example, subjecting silicon monoxide to heat treatment and separating into a SiO₂ phase and a fine Si phase by a disproportionation reaction. When the SiOₓ particles are subjected to cross-section observation using a transmission electron microscope (TEM), the Si phase dispersed in the SiO₂ phase can be confirmed. In the specification of the present application, the composite particles described above may also be referred to as "silicon oxide". In the case where the negative electrode active material includes a silicon oxide, a higher initial discharge capacity is easily ensured.

The silicate phase preferably includes at least either one of an alkali metal element (a group 1 element other than hydrogen in the long-period periodic table) and a group 2 element in the long-period periodic table. Examples of the alkali metal element include lithium (Li), potassium (K), sodium (Na), and the like. Examples of the group 2 element include magnesium (Mg), calcium (Ca), strontium (Sr), barium (Ba), and the like. The lithium silicate phase may have a composition represented by the formula: Li_{2y}SiO_{2+y} (where 0 < y < 2). y may be 1/2 or 1. The silicate composite particles in which the Si phase is dispersed in the silicate phase can be obtained by, for example, pulverizing a mixture of a silicate and a raw silicon material into fine particles while stirring the mixture using a ball mill or the like, and then subjecting the mixture to heat treatment in an inert atmosphere.

The content of the Si phase dispersed in the silicate phase may be 30 mass% or more and 95 mass% or less, or 35 mass% or more and 75 mass% or less of the entire silicate composite particles.

The Si-containing material may include the carbon composite particles alone or a combination of the carbon composite particles and at least one selected from other Si-containing materials. The Si-containing material may include, in addition to the carbon composite particles, for example, at least one selected from the group consisting of a silicon oxide and silicate composite particles (in particular, a silicon oxide).

The content of the silicon oxide in the negative electrode active material may be, for example, 0.1 mass% or more, 0.5 mass% or more, or 1 mass% or more. In this case, the initial discharge capacity can be further increased. The content of the silicon oxide in the negative electrode active material is, for example, 5 mass% or less.

The content of the silicate composite particles in the negative electrode active material may be, for example, 0.1 mass% or more, 0.5 mass% or more, or 1 mass% or more. In this case, a higher initial discharge capacity can be ensured, and the reduction in the capacity retention rate can be further suppressed. The content of the silicate composite particles in the negative electrode active material is, for example, 5 mass% or less.

The composition of the Si-containing material can be determined by, for example, obtaining a backscattered electron image of a cross section of the negative electrode material mixture layer using a field emission scanning electron microscope (FE-SEM), observing the particles of the Si-containing material, and performing elemental analysis on the particles of the Si-containing material observed. For example, the battery is disassembled to take out the negative electrode from the battery, and the negative electrode is cleaned with a non-aqueous solvent such as ethylene carbonate, and then dried. After that, cross section processing is performed on the negative electrode material mixture layer using a cross section polisher (CP). In this way, a sample is obtained. A cross-section of the sample is captured using a FE-SEM to obtain a backscattered electron image. For elemental analysis, for example, electron probe micro analyzer (EPMA) analysis or the like is used. Qualitative and quantitative analysis of elements may be performed using an auger electron spectroscopy (AES) analysis apparatus. The composition of the lithium ion conducting phase can also be determined by performing the above-described analyses. The composition of the carbon phase can be confirmed based on the average interplanar spacing d002 determined based on X-ray diffractometry.

The Si-containing material is usually a particulate material. The Si-containing material may have an average particle size (D50) of, for example, 1 µm or more and 25 µm or less, or 4 µm or more and 15 µm or less. When the Si-containing material has an average particle size within the above-described range, a good battery performance is likely to be obtained.

In the specification of the present application, the term "average particle size (D50)" refers to a particle size (volume average particle size) at 50% cumulative volume in a particle size distribution obtained through measurement performed based on a laser diffraction scattering method. As the measurement apparatus, for example, LA-750 available from HORIBA Ltd. can be used. The average particle size of the Si-containing material may be determined from a cross-sectional sample of the negative electrode formed to obtain a FE-SEM backscattered electron image. For each of ten or more particles of the Si-containing material in the cross section, the equivalent circle diameter is determined, and the average value is defined as the average particle size. As used herein, the term "equivalent circle diameter" refers to the diameter of a circle that has the same area as the area of a particle observed in a cross-section of the negative electrode.

The Si phase dispersed in the carbon phase is usually composed of a plurality of crystallites. The crystallites of the Si phase have a crystallite size of, for example, 500 nm or less, and may be 30 nm or less. The lower limit value of the crystallite size of the crystallites of the Si phase is not particularly limited, but may be, for example, 5 nm or more. The crystallite size is calculated from a half width of a diffraction peak attributed to the Si (111) plane in an X-ray diffraction (XRD) pattern of the Si phase using the Scherrer equation.

The content of the Si phase in the composite particles can be determined from, for example, Si-NMR. Hereinafter, desirable measurement conditions for Si-NMR are shown below.

Measurement apparatus: a solid-state nuclear magnetic resonance spectrum measurement apparatus (INOVA-400) available from Varian, Inc.
Probe: Varian 7 mm CPMAS-2
MAS: 4.2 kHz
MAS speed: 4 kHz
Pulse: DD (45° pulse + signal capture time 1H decoupling)
Repetition time: 1200 sec
Observation amplitude: 100 kHz
Observation center: near -100 ppm
Signal capture time: 0.05 sec
Cumulative count: 560
Sample amount: 207.6 mg

From the viewpoint of improving conductivity, at least a portion of the surface of the particles of the Si-containing material may be covered with a conductive layer. The conductive layer includes a conductive material such as conductive carbon. The amount of the conductive layer that covers at least a portion of the surface of the particles of the Si-containing material is, for example, 1 part by mass or more and 10 parts by mass or less per 100 parts by mass of the total of the particles of the Si-containing material and the conductive layer. The particles of the Si-containing material that have the conductive layer on the surface thereof can be obtained by, for example, mixing coal tar pitch or the like with the particles of the Si-containing material, and subjecting the mixture to heat treatment in an inert atmosphere.

The content of the Si-containing material in the negative electrode active material is 3 mass% or more, preferably 4 mass% or more, and may be 5 mass% or more. When the content of the Si-containing material is within the above-described range, a high initial capacity can be obtained. However, the capacity decreases when charge and discharge are repeated, and the cycle characteristics are likely to decrease. According to the present disclosure, even in this case, by using a non-aqueous electrolyte that contains the first component, a high level of cycle characteristics can be ensured. The content of the Si-containing material is, for example, 15 mass% or less, and may be 10 mass% or less. These lower and upper limit values can be combined in any combination.

### (Other Negative Electrode Active Materials)

Examples of a negative electrode active material other than the Si-containing material include at least one selected from the group consisting of a Si phase-free carbonaceous material, a simple substance of Sn, a Sn alloy, and a Sn compound (a Sn oxide or the like). The Si-containing material expands and contracts in volume during charge and discharge. For this reason, when the ratio of the Si-containing material in the negative electrode active material is large, a contact failure is likely to occur between the negative electrode active material and the negative electrode current collector during charge and discharge. A carbonaceous material expands and contracts less during charge and discharge than the Si-containing material. By using the Si-containing material and the carbonaceous material in combination, when charge and discharge are repeated, the contact state between negative electrode active material particles and the contact state between the negative electrode material mixture and the negative electrode current collector can be maintained at a more favorable level. Accordingly, by using the Si-containing material and the Si phase-free carbonaceous material in combination, excellent cycle characteristics are likely to be obtained while imparting a high capacity of the Si phase to the negative electrode.

Examples of the carbonaceous material include graphite, graphitizable carbon (soft carbon), and non-graphitizable carbon (hard carbon). These carbonaceous materials may be used alone or in a combination of two or more.

Among the examples of the carbonaceous material listed above, in particular, it is preferable to use graphite as the carbonaceous material because it has excellent charge/discharge stability and a small irreversible capacity. Examples of the graphite include natural graphite, artificial graphite, and graphitized mesophase carbon particles. Each of the graphite particles may partially include amorphous carbon, graphitizable carbon, or non-graphitizable carbon.

As used herein, the term "graphite" refers to a carbonaceous material that has a developed graphite-type crystal structure. The average interplanar spacing d002 of the (002) plane of the graphite determined through measurement performed based on X-ray diffractometry may be, for example, 0.340 nm or less, or 0.3354 nm or more and 0.340 nm or less. Also, the crystallite size Lc (002) of the graphite may be, for example, 5 nm or more, or 5 nm or more and 200 nm or less. The crystallite size Lc (002) is determined through measurement performed based on, for example, the Scherrer method. When the average interplanar spacing d002 of the (002) plane and the crystallite size Lc (002) of the graphite are within the above-described ranges, a high capacity is likely to be obtained.

The ratio of the total amount of the Si-containing material and the carbonaceous material (Si phase-free carbonaceous material) in the negative electrode active material is preferably 90 mass% or more, and may be 95 mass% or more or 98 mass% or more. The ratio of the total amount of the Si-containing material and the carbonaceous material in the negative electrode active material is 100 mass% or less. The negative electrode active material may be composed only of the Si-containing material and the carbonaceous material.

### (Binder)

As the binder, for example, a resin material is used. Examples of the binder include: fluorine resins (for example, polytetrafluoroethylene and polyvinylidene fluoride), polyolefin resins (for example, polyethylene and polypropylene), polyamide resins (for example, aramid resin), polyimide resins (for example, polyimide and polyamide imide), acrylic resins (for example, polyacrylic acid, polymethacrylic acid, an acrylic acid-methacrylic acid copolymer, an ethylene-acrylic acid copolymer, and salts thereof), vinyl resins (for example, polyvinyl acetate), and rubbery materials (for example, a styrene-butadiene copolymer rubber (SBR)). These binders may be used alone or in a combination of two or more.

### (Thickener)

Examples of the thickener include a cellulose derivative such as cellulose ether. Examples of the cellulose derivative include CMC, a modified form thereof, methyl cellulose, and the like. Examples of the modified form of CMC include salts of CMC. The salts include an alkali metal salt (for example, a sodium salt), an ammonium salt, and the like. These thickeners may be used alone or in a combination of two or more.

### (Conductive Agent)

Examples of the conductive agent include conductive fibers or conductive particles. Examples of the conductive fibers include carbon fibers, metal fibers, and the like. Examples of the carbon fibers also include carbon nanotubes (CNTs). Examples of the conductive particles include conductive carbon (carbon black or the like), a metal powder, and the like. These conductive agents may be used alone or in a combination of two or more.

### (Negative Electrode Current Collector)

The negative electrode current collector is selected according to the type of non-aqueous electrolyte secondary battery. Examples of the negative electrode current collector include a sheet-shaped current collector. As the current collector, a metal foil or the like may also be used. Also, as the current collector, a porous current collector may also be used. Examples of the porous current collector include a mesh, a punched sheet, and an expanded metal.

Examples of the material of the negative electrode current collector include stainless steel, nickel, a nickel alloy, copper, and a copper alloy.

The thickness of the negative electrode current collector is, but is not particularly limited to, for example, 1 to 50 µm, and may be 5 to 30 µm.

### (Others)

The negative electrode can be formed, for example, by applying a negative electrode slurry prepared by dispersing constituent components of a negative electrode material mixture in a dispersion medium onto the surface of a negative electrode current collector, and drying the formed coating film. The coating film after drying may be rolled as needed.

There is no particular limitation on the dispersion medium. Examples of the dispersion medium include water, an alcohol (for example, ethanol), an ether (for example, tetrahydrofuran), an amide (for example, dimethylformamide), N-methyl-2-pyrrolidone (NMP), and mixed solvents thereof.

### (Positive Electrode)

The positive electrode may include a positive electrode current collector and a positive electrode material mixture layer supported on a surface of the positive electrode current collector. The positive electrode material mixture layer can be formed by applying a positive electrode slurry prepared by dispersing a positive electrode material mixture in a dispersion medium onto the surface of the positive electrode current collector, and drying the formed coating film. The coating film after drying may be rolled as needed. The positive electrode material mixture includes a positive electrode active material as an essential component, and may also include a binder, a conductive agent, and the like as optional components. The dispersion medium can be selected from among, for example, the dispersion media listed as examples of the dispersion medium for the negative electrode.

As the positive electrode active material, for example, a composite oxide that includes lithium and a transition metal can be used. Examples of the transition metal include Ni, Co, Mn, and the like. Examples of the composite oxide that includes lithium and a transition metal include LiₐCoO₂, LiₐNiO₂, LiₐMnO₂, LiₐCo_{b1}Ni_{1-b1}O₂, LiₐCo_{b1}M_{1-b1}O_{c1}, LiₐNi₁-_{b1}M_{b1}O_{c1}, LiₐMn₂O₄, and LiₐMn_{2-b1}M_{b1}O₄, where a = 0 to 1.2, b1 = 0 to 0.9, and c1 = 2.0 to 2.3, and M represents at least one selected from the group consisting of Na, Mg, Sc, Y, Mn, Fe, Co, Ni, Cu, Zn, Al, Cr, Pb, Sb, and B. The value of a that represents the molar ratio of lithium varies due to charging and discharging.

Among these, it is preferable to use a lithium nickel composite oxide represented by LiₐNi_{b2}M_{1-b2}O₂ (where 0 < a ≤ 1.2, 0.3 ≤ b2 ≤ 1, and M represents at least one selected from the group consisting of Mn, Co, and Al). From the viewpoint of achieving a high capacity, it is more preferable that 0.8 ≤ b2 ≤ 1 or 0.85 ≤ b2 ≤ 1 is satisfied. From the viewpoint of stability of the crystal structure, it is more preferable to use LiₐNi_{b2}Co_{c2}Al_{d}O₂ (0 < a ≤ 1.2, 0.8 ≤ b2 < 1, 0 < c2 < 0.2 (or 0 < c2 ≤ 0.18), 0 < d ≤ 0.1, and b2 + c2 + d = 1).

As the binder, any of the resin materials listed as examples of the binder in the description of the negative electrode can be used. As the conductive agent, for example, it is possible to select any from the conductive agents listed as examples of the conductive agent in the description of the negative electrode. As the conductive agent, graphite may also be used.

The shape and the thickness of the positive electrode current collector can be selected from the shapes and the thickness value range shown in the description of the negative electrode current collector. Examples of the material of the positive electrode current collector include stainless steel, aluminum, an aluminum alloy, and titanium.

In the non-aqueous electrolyte secondary battery, the positive electrode exhibits a high potential during charge, and thus oxidative decomposition is likely to occur in the positive electrode. It is considered that the first component also acts on the positive electrode and forms a protection coating film. For this reason, even when charge and discharge are repeated at a temperature higher than room temperature, even in the positive electrode, side reactions are likely to be suppressed, and a higher capacity retention rate can be ensured. In addition, the effect of reducing the amount of gas generated during high temperature storage is enhanced.

### (Separator)

Usually, it is desirable to provide a separator between the positive electrode and the negative electrode. The separator has high ion permeability, an appropriate mechanical strength, and insulation properties. Examples of the separator include a micro-porous thin film, a woven fabric, and a non-woven fabric. The separator may have a single-layer structure or a muti-layer structure. As the separator that has a muti-layer structure, a stacked body that includes, as layers, at least two selected from a micro-porous thin film, a woven fabric, and a non-woven fabric may be used. As the material of the separator, it is preferable to use a polyolefin (for example, polypropylene or polyethylene).

### (Non-Aqueous Electrolyte)

The non-aqueous electrolyte may be in the form of a liquid, or may be in the form of a solid (for example, in a state in which the flowability is limited by a gelling agent, a polymer, or the like (a gel electrolyte, a polymer electrolyte, or the like)). The non-aqueous electrolyte usually contains a non-aqueous solvent and a lithium salt dissolved in the non-aqueous solvent, and also contains an additive. In the present disclosure, the non-aqueous electrolyte contains a first component. The non-aqueous electrolyte may further contain an additive other than the first component.

### (Non-Aqueous Solvent)

Examples of the non-aqueous solvent include a cyclic carbonic acid ester, a linear carbonic acid ester, a cyclic carboxylic acid ester, and a linear carboxylic acid ester. Examples of the cyclic carbonic acid ester include propylene carbonate (PC), and ethylene carbonate (EC). Examples of the linear carbonic acid ester include diethyl carbonate (DEC), ethyl methyl carbonate (EMC), dimethyl carbonate (DMC), and the like. Examples of the cyclic carboxylic acid ester include γ-butyrolactone (GBL), γ-valerolactone (GVL), and the like. Examples of the linear carboxylic acid ester include methyl formate, ethyl formate, propyl formate, methyl acetate (MA), ethyl acetate, propyl acetate, methyl propionate, ethyl propionate, propyl propionate, and the like. The non-aqueous electrolyte may contain one or a combination of two or more of the non-aqueous solvents.

### (Lithium Salt)

Examples of the lithium salt include LiClO₄, LiBF₄, LiPF₆, LiAlCl₄, LiSbF₆, LiSCN, LiCFsSOs, LiCF₃CO₂, LiAsF₆, LiB₁₀Cl₁₀, a lithium lower aliphatic carboxylate, LiCl, LiBr, LiI, a phosphoric acid salt, a boric acid salt, and an imide salt. Examples of the phosphoric acid salt include lithium difluorophosphate (LiPO₂F2), lithium difluorobis(oxalato)phosphate (LiDFBOP), lithium tetrafluoro(oxalato)phosphate, and the like. Examples of the boric acid salt include lithium bis(oxalato)borate (LiBOB), lithium difluoro(oxalato)borate (LiDFOB), and the like. Examples of the imide salt include lithium bis(fluorosulfonyl) imide (LiN(FSO₂)₂), lithium bis(trifluoromethane sulphonyl) imide (LiN(CF₃SO₂)₂), lithium trifluoro methanesulphonyl nonafluoro butanesulphonyl imide (LiN(CF₃SO₂) (C₄F₉SO₂)), lithium bis(pentafluoroethane sulphonyl) imide (LiN(C₂F₅SO₂)₂), and the like. The non-aqueous electrolyte may contain one or a combination of two or more of the lithium salts.

The concentration of the lithium salt in the non-aqueous electrolyte is, for example, 0.5 mol/L or more and 2 mol/L or less.

### (First Component)

The first component is a 5- or 6-membered sulfur-containing cyclic ester compound that has a carbon-carbon unsaturated bond and a structure represented by -O-S(= O)n-O-, where n is 1 or 2. In the structure represented by -O-S(= O)n-O-, two oxy groups (-O-) and a sulfur element (S) constitute a 5- or 6-membered ring. In other words, it can be said that the first component is at least one selected from the group consisting of a cyclic sulfate ester (n = 2) and a cyclic sulfite ester (n = 1). The first component also encompasses salts of these esters.

The first component has, for example, at least one selected from the group consisting of a substituent that has a carbon-carbon unsaturated bond and a carbon-carbon unsaturated bond that constitutes a ring. The carbon-carbon unsaturated bond may be at least one selected from the group consisting of a carbon-carbon double bond and a carbon-carbon triple bond. Examples of the substituent that has a carbon-carbon unsaturated bond include a vinyl group, an allyl group, an ethynyl group, and a propargyl group. The number of carbon atoms in the substituent is, for example, 2 or more and 6 or less, and may be 2 or more and 4 or less. In the case where the carbon-carbon unsaturated bond constitutes a ring, the first component may have a vinylene group, an ethynylene group, or the like as a ring-constituting structure.

The first component may have a substituent in the ring. Examples of the substituent include, in addition to the substituent that has a carbon-carbon unsaturated bond, an alkyl group, a hydroxy alkyl group, an alkoxy group, a hydroxy group, a halogen atom, and the like. The number of carbon atoms in each of the alkyl group, the hydroxy the alkyl group, and the alkoxy group is, for example, 1 or more and 6 or less, and may be 1 or more and 4 or less, or 1 or more and 3 or less. The alkyl group, the hydroxy alkyl group, and the alkoxy group may be linear or branched. Examples of the alkyl group include a methyl group, an ethyl group, an n-propyl group, an isopropyl group, an n-butyl group, a sec-butyl group, a tert-butyl group, and the like. The hydroxy alkyl group may be a hydroxy alkyl group that corresponds to the above-described alkyl group. The number of hydroxy groups in the hydroxy alkyl group is, for example, 1 or more and 3 or less, and preferably 1 or 2 (in particular 1). Examples of the alkoxy group include a methoxy group, an ethoxy group, an n-propoxy group, an n-butoxy group, and the like. Examples of the halogen atom include a chlorine atom, a fluorine atom, and the like.

As the first component, it is preferable to use a 5-membered sulfate ester compound, a 5-membered sulfite ester compound, or the like. In particular, it is preferable to use a compound represented by the following formula (1a) (in other words, an ethylene sulfate compound that has a substituent that has a carbon-carbon unsaturated bond or an ethylene sulfite compound that has a substituent that has a carbon-carbon unsaturated bond), a compound represented by the following formula (1b) (in other words, a vinylene sulfate compound or a vinylene sulfite compound), or the like. These compounds also encompass compounds that have the above-described substituents. 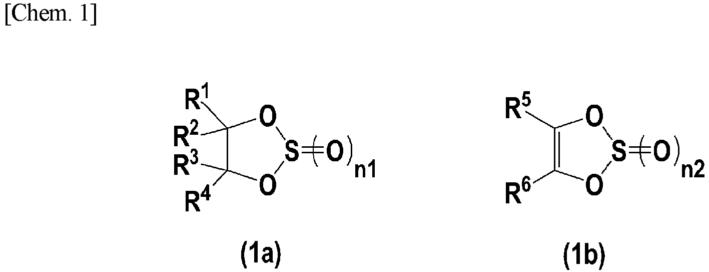 where R¹ to R⁶ each independently represent a hydrogen atom or a substituent, at least one of R¹ to R⁴ has a carbon-carbon unsaturated bond, and n1 and n2 each independently represent 1 or 2.

The numbers n1 and n2 represent the same values as n described above. In the case where n1 or n2 is 2, the compound is a sulfate ester. In the case where n1 or n2 is 1, the compound is a sulfite ester.

The substituents represented by R¹ to R⁶ correspond to the above-described substituents. Specifically, examples include a substituent that has a carbon-carbon unsaturated bond, an alkyl group, a hydroxy alkyl group, an alkoxy group, a hydroxy group, a halogen atom, and the like, those described above. At least one of R¹ to R⁴ represents a substituent that has a carbon-carbon unsaturated bond. It is preferable that one of R¹ to R⁴ represents a substituent that has a carbon-carbon unsaturated bond, and the remaining three represent other substituents (an alkyl group or the like) or hydrogen atoms. Two or three of R¹ to R⁴ may be the same, or all of R¹ to R⁴ may be different. Among examples of the substituent that has a carbon-carbon unsaturated bond, an alkenyl group such as a vinyl group or an allyl group is preferable. The number of carbon atoms in the alkenyl group is, for example, 2 or more and 6 or less, and may be 2 or more and 4 or less. R⁵ and R⁶ may each represent a substituent that has a carbon-carbon unsaturated bond (a vinyl group, an allyl group, or the like), but R⁵ and R⁶ preferably represent other substituents (an alkyl group or the like) or hydrogen atoms. R⁵ and R⁶ may be the same or different.

The first component preferably includes a vinyl ethylene sulfite compound, an allyl ethylene sulfite compound, a vinyl ethylene sulfate compound, an allyl ethylene sulfate compound, a vinylene sulfite compound, or a vinylene sulfate compound. These compounds also encompass compounds that have the above-described substituents. Among these, the first component preferably includes at least one selected from the group consisting of a vinyl ethylene sulfite compound, an allyl ethylene sulfite compound, and a vinylene sulfate compound.

The non-aqueous electrolyte may contain one or a combination of two or more of the first components.

In the non-aqueous electrolyte secondary battery, the concentration of the first component in the non-aqueous electrolyte is, for example, 5 mass% or less, and may be 2 mass% or less, 1.5 mass% or less, or 1 mass% or less. The concentration of the first component is a value determined for the non-aqueous electrolyte obtained from an initial non-aqueous electrolyte secondary battery. In the non-aqueous electrolyte secondary battery, the first component is used to form a coating film, and thus the concentration of the first component in the non-aqueous electrolyte varies during storage period or during charge/discharge cycle period. For this reason, it is sufficient that the first component remains in the non-aqueous electrolyte obtained from the non-aqueous electrolyte secondary battery (preferably, the initial non-aqueous electrolyte secondary battery) at a concentration greater than or equal to the detection limit. The concentration of the first component in the electrolyte solution may be 0.01 mass% or more, 0.1 mass% or more, 0.25 mass% or more, or 0.5 mass% or more. These lower and upper limit values can be combined in any combination. The concentration of the first component in the non-aqueous electrolyte may be greater than or equal to the detection limit and 5 mass% or less (or 2 mass% or less), greater than or equal to the detection limit and 1.5 mass% or less (or 1 mass% or less), 0.01 mass% or more and 2 mass% or less (or 1.5 mass% or less), or 0.01 mass% or more and 1 mass% or less.

As used herein, the term "initial non-aqueous electrolyte secondary battery" refers to, for example, a non-aqueous electrolyte secondary battery that has been subjected to pre-charge/discharge (and optionally aging) after assembling the non-aqueous electrolyte secondary battery. A commercially available non-aqueous electrolyte secondary battery may be used as the initial non-aqueous electrolyte secondary battery, and the non-aqueous electrolyte may be obtained from the battery, and subjected to analysis.

The concentration of the first component in the non-aqueous electrolyte used to produce the non-aqueous electrolyte secondary battery may be 0.1 mass% or more, 0.2 mass% or more, 0.25 mass% or more, or 0.5 mass% or more. The upper limit of the concentration of the first component in the non-aqueous electrolyte used to produce the non-aqueous electrolyte secondary battery is the same as described above. These lower and upper limit values can be combined in any combination. The concentration of the first component in the non-aqueous electrolyte used to produce the non-aqueous electrolyte secondary battery may be, for example, 0.1 mass% or more and 5 mass% or less (or 2 mass% or less), 0.2 mass% or more and 2 mass% or less (or 1.5 mass% or less), or 0.5 mass% or more and 1.5 mass% or less (or 1 mass% or less).

### (Fluorine-Containing Cyclic Carbonate (Second Component))

The non-aqueous electrolyte may further contain a fluorine-containing cyclic carbonate. As used herein, the term "fluorine-containing cyclic carbonate" refers to a compound in which at least one hydrogen atom in a cyclic carbonate is substituted by a fluorine atom. In the specification of the present application, the fluorine-containing cyclic carbonate may also be referred to as "second component".

In the case where the non-aqueous electrolyte contains a second component, it is considered that a protection coating film derived from the second component is also formed on the negative electrode surface in addition to a protection coating film derived from the first component. Accordingly, the effect of suppressing side reactions is enhanced, and thus the effect of suppressing the decrease in capacity when charge and discharge are repeated at room temperature (for example, 25°C) is enhanced. On the other hand, the coating film derived from the second component has low thermal stability, and thus the capacity is likely to decrease when charge and discharge are repeated at a temperature (for example, 45°C) higher than room temperature. In addition, the coating film is likely to be decomposed during high temperature storage to generate a large amount of gas. In the present disclosure, because the non-aqueous electrolyte contains a first component, even when the negative electrode includes carbon composite particles each including a Si phase, and the non-aqueous electrolyte contains a second component, it is possible to ensure a high capacity retention rate when charge and discharge are repeated at a temperature (for example, 45°C) higher than room temperature, and also suppress the amount of gas generated during high temperature storage to a low level.

The second component includes, for example, a compound represented by the following formula (2). 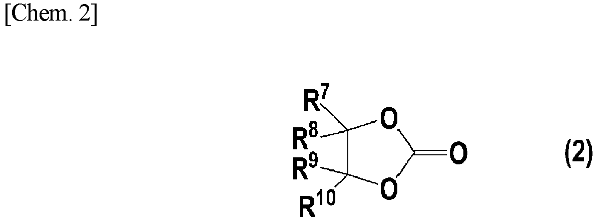 where R⁷ to R¹⁰ each independently represent a hydrogen atom, a methyl group, or a halogen atom, and at least one of R⁷ to R¹⁰ represents a fluorine atom.

Examples of the halogen atom represented by R⁷ to R¹⁰ include a fluorine atom, a chlorine atom, a bromine atom, an iodine atom (in particular, a fluorine atom and a chlorine atom), and the like. The number of fluorine atoms in the second component may be one or more.

Specific examples of the second component include fluorinated ethylene carbonates (for example, fluoroethylene carbonate (FEC), 1,2-difluoroethylene carbonate, and 1,1-difluoroethylene carbonate), 1-fluoropropylene carbonate, 3,3,3-trifluoropropylene carbonate, and 2,3-difluoro-2,3-butylene carbonate. From the viewpoint of enhancing the effect of suppressing the decrease in capacity when charge and discharge are repeated at room temperature (for example, 25°C), the second component preferably includes FEC. The second components may be used alone or in a combination of two or more.

The concentration of the second component in the non-aqueous electrolyte is, for example, 10 mass% or less, and may be 6 mass% or less, or 5 mass% or less. When the concentration of the second component is within the above-described range, the effect of suppressing the decrease in capacity when charge and discharge are repeated at a temperature (for example, 45°C) higher than room temperature is enhanced, the effect of reducing the amount of gas generated during high temperature storage is also enhanced. The concentration of the second component is a value determined for the non-aqueous electrolyte obtained from the initial non-aqueous electrolyte secondary battery. In the non-aqueous electrolyte secondary battery, the second component is used to form a coating film, and thus the concentration of the second component in the non-aqueous electrolyte varies during storage period or during charge/discharge cycle period. For this reason, it is sufficient that the second component remains in the non-aqueous electrolyte obtained from the non-aqueous electrolyte secondary battery (preferably, the initial non-aqueous electrolyte secondary battery) at a concentration greater than or equal to the detection limit. The concentration of the second component in the non-aqueous electrolyte may be 0.01 mass% or more, or 0.1 mass% or more. From the viewpoint of further enhancing the advantageous effects obtained by using the second component, the concentration of the second component in the non-aqueous electrolyte may be 0.5 mass% or more, or 1 mass% or more. When the concentration of the second component in the non-aqueous electrolyte is greater than 1 mass%, the effect of suppressing the reduction in the capacity retention rate and the effect of reducing the amount of gas generated during high temperature storage that are obtained by using the first component are remarkably exhibited. The concentration of the second component in the non-aqueous electrolyte may be 1.5 mass% or more, 2 mass% or more, or 3 mass% or more. These lower and upper limit values can be combined in any combination. The concentration of the second component in the non-aqueous electrolyte may be, for example, greater than or equal to the detection limit and 10 mass% or less (or 5 mass% or less), 0.01 mass% or more (or 0.1 mass% or more) and 10 mass% or less, 0.5 mass% or more and 10 mass% or less (or 6 mass% or less), greater than 1 mass% and 10 mass% or less (or 6 mass% or less), 1.5 mass% or more and 10 mass% or less (or 6 mass% or less), 2 mass% or more and 6 mass% or less (or 5 mass% or less), or 3 mass% or more and 6 mass% or less (or 5 mass% or less). The concentration of FEC may be within the above-described range.

The concentration of the second component in the non-aqueous electrolyte used to produce the non-aqueous electrolyte secondary battery may be 0.1 mass% or more, 0.5 mass% or more, 1 mass% or more, greater than 1 mass%, 2 mass% or more, 3 mass% or more, or 4 mass% or more. The upper limit of the concentration of the second component in the non-aqueous electrolyte used to produce the non-aqueous electrolyte secondary battery may be the same as described above. These lower and upper limit values can be combined in any combination. The concentration of the second component in the non-aqueous electrolyte used to produce the non-aqueous electrolyte secondary battery may be, for example, 0.1 mass% or more and 10 mass% or less (or 5 mass% or less), 0.5 mass% or more and 10 mass% or less (or 6 mass% or less), 1 mass% or more and 10 mass% or less (or 5 mass% or less), or 3 mass% or more and 6 mass% or less (or 5 mass% or less). The concentration of FEC may be within the above-described range.

The mass ratio of the second component to the first component (= second component/first component) is, for example, 20 or less, and may be 15 or less, 10 or less, 8 or less, 5 or less, or 4 or less. With a mass ratio within the above-described range, even when the second component is used, it is possible to further suppress the decrease in capacity when charge and discharge are repeated at a temperature (for example, 45°C) higher than room temperature, and further reduce the amount of gas generated during high temperature storage. The mass ratio may be, for example, 0.5 or more, or 1 or more. The mass ratio of FEC to the first component may be within the above-described range. The mass ratio of the second component to the first component is a value determined for the non-aqueous electrolyte obtained from the initial non-aqueous electrolyte secondary battery. In the non-aqueous electrolyte used to produce the non-aqueous electrolyte secondary battery, the mass ratio may be within the above-described range. The upper and lower limit values of the mass ratio can be combined in any combination. The mass ratio (second component/first component) may be 0.5 or more (or 1 or more) and 20 or less, 0.5 or more (or 1 or more) and 15 or less, 1 or more and 10 or less (or 8 or less), or 1 or more and 5 or less (or 4 or less).

### (Others)

The non-aqueous electrolyte may contain an additive other than the first component and the second component. As the additive, it is possible to use a sulfur-containing compound other than the first component, a phosphorus-containing compound, a nitrogencontaining compound, a silicon-containing compound, or an aromatic compound (cyclohexylbenzene, fluorobenzene, or the like). The sulfur-containing compound may include at least one selected from the group consisting of linear sulfate esters (ethyl sulfate, methyl sulfate, and the like), linear sulfite esters, linear sulfonic acid esters, and cyclic sulfonic acid esters. The sulfur-containing compound also encompasses salts of these esters (ethyl sulfate, methyl sulfate, and the like). The non-aqueous electrolyte may contain one or a combination of two or more of the additives. However, the proportion of the first component in the entire sulfur-containing compound as the additive contained in the non-aqueous electrolyte is preferably high, and may be, for example, 75 mass% or more, or 90 mass% or more. The proportion of the first component in the entire sulfur-containing compound as the additive contained in the non-aqueous electrolyte is 100 mass% or less. The sulfur-containing compound as the additive contained in the non-aqueous electrolyte may be composed only of the first component.

The non-aqueous electrolyte may contain a vinylene carbonate compound such as vinylene carbonate. However, with the vinylene carbonate compound, the effect of forming a protection coating film for the Si-containing material is lower than that of the second component, and the amount of gas generated is about the same as that of the second component. For this reason, from the viewpoint of reducing the amount of gas generated, the concentration of the vinylene carbonate compound in the non-aqueous electrolyte is preferably low (for example, at a concentration of 2 mass% or less).

As an example of a structure of the non-aqueous electrolyte secondary battery, the non-aqueous electrolyte secondary battery may have a structure in which an electrode group formed by spirally winding a positive electrode and a negative electrode with a separator interposed therebetween is housed in an outer case together with a non-aqueous electrolyte. However, the structure of the non-aqueous electrolyte secondary battery is not limited thereto. For example, the electrode group may be a stacked electrode group formed by stacking a positive electrode and a negative electrode with a separator interposed therebetween. There is no particular limitation on the shape of the non-aqueous electrolyte secondary battery, either. The non-aqueous electrolyte secondary battery may have, for example, a cylindrical shape, a prismatic shape, a coin shape, a button shape, or a laminate shape.

Fig. 1 is a schematic partially cutaway perspective view of a prismatic non-aqueous electrolyte secondary battery according to one embodiment of the present disclosure. The non-aqueous electrolyte secondary battery includes a bottomed prismatic battery case 4, and an electrode group 1 and a non-aqueous electrolyte (not shown) housed in the battery case 4. The electrode group 1 includes an elongated strip-shaped negative electrode, an elongated strip-shaped positive electrode, and a separator interposed between the negative electrode and the positive electrode. A negative electrode current collector included in the negative electrode is electrically connected to a negative electrode terminal 6 provided in a sealing plate 5 via a negative electrode lead 3. The negative electrode terminal 6 is insulated from the sealing plate 5 by a resin gasket 7. A positive electrode current collector included in the positive electrode is electrically connected to the underside of the sealing plate 5 via a positive electrode lead 2. That is, the positive electrode is electrically connected to the battery case 4 that also functions as a positive electrode terminal. The peripheral edge of the sealing plate 5 is fitted to an opening end portion of the battery case 4, and the fitted portion is laser welded. The sealing plate 5 has an injection hole for injecting the non-aqueous electrolyte, and the injection hole is closed by a sealing cap 8 after the non-aqueous electrolyte solution is injected.

### [Examples]

Hereinafter, the present invention will be specifically described based on examples and comparative examples. However, the present invention is not limited to the examples given below.

### <<Examples 1 to 5 and Comparative Examples 1 to 6»

In each of Examples 1 to 5 and Comparative Examples 1 to 6, a non-aqueous electrolyte secondary battery was produced and evaluated in the following procedure.

### (1) Production of Negative Electrode

An appropriate amount of water was added to a negative electrode material mixture, and mixed to obtain a negative electrode slurry. As the negative electrode material mixture, a mixture of a negative electrode active material, a binder, and a conductive agent was used.

As the negative electrode active material, components shown in Table 1 were used such that the content of each component in the entire negative electrode active material was a value (mass%) shown in Table 1. Note that the content of the negative electrode active material was calculated excluding the conductive layer.

The following components are shown in Table 1 as the negative electrode active material.
(a) Carbon composite particles: carbon composite particles each including a carbon phase and a Si phase dispersed in the carbon phase, with the surfaces of the carbon composite particles being covered with a conductive layer including conductive carbon (with a Si phase content of 50 mass% in the particles excluding the conductive layer, and an average particle size (D50) of 6 µm)
(b) Silicon oxide: SiOₓ particles (where x = 1, with an average particle size (D50) of 5 µm), with the surfaces of the SiOₓ particles being covered with a conductive layer including conductive carbon
(c) Graphite particles: with an average particle size (D50) of 25 µm

As the binder, sodium polyacrylate (PAA-Na), a sodium salt of CMC (CMC-Na), and SBR were used. The content of each of PAA-Na, CMC-Na, and SBR in the negative electrode material mixture was set to 1 mass% on a dry solid basis.

Next, the negative electrode slurry was applied to both surfaces of a copper foil, and the coating films were dried and then rolled to form a negative electrode material mixture layer (with a thickness of 80 µm and a density of 1.6 g/cm³) on each of the surfaces of the copper foil. In this way, a negative electrode was obtained.

### (2) Production of Positive Electrode

2.5 parts by mass of acetylene black, 2.5 parts by mass of polyvinylidene fluoride, and an appropriate amount of NMP were added to 95 parts by mass of a lithiumcontaining composite oxide (LiNi_{0.88}Co_{0.09}Al_{0.03}O₂) and then mixed to obtain a positive electrode slurry. Next, the positive electrode slurry was applied to both surfaces of an aluminum foil, and the coating films were dried and then rolled to form a positive electrode material mixture layer (with a thickness of 95 µm and a density of 3.6 g/cm³) on each of the surfaces of the aluminum foil. In this way, a positive electrode was obtained.

### (3) Preparation of Non-Aqueous Electrolyte

LiPF₆ and optionally a sulfur-containing cyclic ester shown in Table 1 were dissolved in a mixed solvent of EC and EMC (EC:EMC = 30:70 (volume ratio)), and optionally FEC was mixed to prepare a non-aqueous electrolyte in the form of a liquid. The concentration of LiPF₆ in the non-aqueous electrolyte was set to 1.4mol/L. The concentration of the sulfur-containing cyclic ester in the non-aqueous electrolyte and the concentration of FEC in the non-aqueous electrolyte (the concentrations at the preparation of the non-aqueous electrolyte) were set to values (mass%) shown in Table 1.

### (4) Production of Non-Aqueous Electrolyte Secondary Battery

A positive electrode lead made of aluminum was attached to an exposed portion of the positive electrode current collector of the positive electrode, and a negative electrode lead made of nickel was attached to an exposed portion of the negative electrode current collector of the negative electrode. After that, the positive electrode and the negative electrode were spirally wound with a separator interposed therebetween to produce a spirally wound electrode group. As the separator, a microporous thin film made of polyethylene was used. The electrode group was housed in a battery case. At this time, an upper insulating plate and a lower insulating plate that were made of resin were placed on the top and the bottom of the electrode group. The negative electrode lead was welded to the inner bottom surface of the battery case. The positive electrode lead was welded to a metal sealing member serving also as a positive electrode terminal. After that, the non-aqueous electrolyte in the form of a liquid was injected into the battery case, and then the opening of the battery case was sealed with the sealing member. At this time, a resin gasket was provided between the opening end portion of the battery case and the sealing member. In this way, a cylindrical non-aqueous electrolyte secondary battery (with a nominal capacity of 5000 mAh) was obtained.

### <<Evaluation>>

Each of the obtained non-aqueous electrolyte secondary batteries was subjected to the following evaluations.

### (1) Initial Capacity

In an environment at 25°C, constant current charge was performed at a current of 0.5 C (180 mA) until the voltage of the non-aqueous electrolyte secondary battery reached 4.2 V After that, constant voltage charge was performed at a voltage of 4.2 V until the current of the non-aqueous electrolyte secondary battery reached 0.05 C (18 mA). After an interval of 10 minutes, constant current discharge was performed at a current of 0.7 C (252 mA) until the voltage of the non-aqueous electrolyte secondary battery reached 2.5 V The discharge capacity (Ci) obtained at this time was determined as the initial capacity.

### (2) Capacity Retention Rate

A series of operations for obtaining the discharge capacity Ci including charging, an interval, and discharging was defined as 1 cycle. This cycle was repeated 200 times, and the discharge capacity (Cc) at the 200th cycle was obtained. The ratio (%) of discharge capacity Cc1, with the initial discharge capacity Ci being set to 100%, was determined as the capacity retention rate at 25°C.

The ratio (%) of discharge capacity Cc2, with the initial discharge capacity Ci being set to 100%, was obtained as the capacity retention rate at 45°C in the same manner as the capacity retention rate at 25°C, except that the cycle of charging, an interval, and discharging was performed at 45°C.

### (3) Amount of Gas Generated

In an environment at 25°C, constant current charge was performed at a current of 0.5 C (180 mA) until the voltage of the non-aqueous electrolyte secondary battery reached 4.2 V After that, constant voltage charge was performed at a voltage of 4.2 V until the current of the non-aqueous electrolyte secondary battery reached 0.05 C (18 mA). The charged battery was stored in an environment at 80°C for 72 hours, and the amount of gas generated in the battery was measured based on the Archimedes method. Specifically, the amount of volume increase in the battery increased due to gas generation was measured. The amount of gas generated in each battery was expressed as a relative value with the amount of gas generated in the battery of Comparative Example 1 being set to 100%.

The results obtained in Examples and Comparative Examples are shown in Table 1. In Table 1, batteries E1 to E5 correspond to the batteries obtained in Examples 1 to 5, respectively, and batteries C1 to C6 correspond to the batteries obtained in Comparative Examples 1 to 6, respectively. The initial capacity is expressed as a relative value of the initial capacity Ci of the battery of each example, with the initial capacity Ci of the battery of Comparative Example 1 being set to 100%.

**[Table 1]**

| | Negative electrode active material (mass%) | | | Non-aqueous electrolyte | | | | Initial capacity in relative ratio | Capacity retention rate at 25°C(%) | Capacity retention rate at 45°C(%) | Amount of gas generated in relative ratio |
|---|---|---|---|---|---|---|---|---|---|---|---|
| | Silicon oxide | Carbon composite particles | Graphite particles | Sulfur-containing cyclic ester (a) | | FEC (b) (mass%) | b/a | | | | |
| | | | | Type | (mass%) | | Mass ratio | | | | |
| E5 | 1 | 5 | 94 | VESi | 0.5 | 4.0 | 8.0 | 100 | 89.2 | 86.5 | 167 |
| E1 | | | | VESi | 1.0 | 4.0 | 4.0 | 100 | 89.8 | 88.1 | 146 |
| E2 | | | | VESi | 1.0 | 1.0 | 1.0 | 100 | 88.4 | 87.5 | 121 |
| E3 | | | | VESi | 1.0 | 0 | - | 100 | 869 | 89.8 | 77 |
| E4 | | | | VSa | 1.0 | 4.0 | 4.0 | 100 | 89.0 | 87.4 | 164 |
| C1 | 1 | 5 | 94 | - | 0 | 0 | - | 100 | 86.5 | 87.8 | 100 |
| C2 | | | | - | 0 | 1.0 | - | 100 | 87.2 | 86.5 | 143 |
| C3 | | | | - | 0 | 4.0 | - | 100 | 88.9 | 85.4 | 208 |
| C4 | | | | ES | 1.0 | 4.0 | 4.0 | 100 | 88.6 | 85.8 | 217 |
| C5 | 0 | 0 | 100 | - | 0 | 0 | - | 94 | 91.5 | 90.2 | 88 |
| C6 | | | | VESi | 1.0 | 4.0 | 4.0 | 94 | 92.2 | 88.5 | 136 |

| | | | | | | | | | | | |
|---|---|---|---|---|---|---|---|---|---|---|---|
| FEC: fluoroethylene carbonate VESi: vinyl ethylene sulfite VSa: vinylene sulfate ES: ethylene sulfite | | | | | | | | | | | |

As shown in Table 1, in the case where only graphite particles are used as the negative electrode active material, the capacity retention rate at 25°C and the capacity retention rate at 45°C both exhibit high values greater than 90%, and the amount of gas generated is also small (C5). In contrast thereto, in the case where a negative electrode active material including carbon composite particles each including a Si phase dispersed in a carbon phase is used, a higher initial capacity is obtained as compared with the case where only graphite particles are used as the negative electrode active material. However, the capacity retention rate at 25°C and the capacity retention rate at 45°C both decrease, and the amount of gas generated during high temperature storage also increases by 12% (compare C1 with C5).

In the case where a FEC-containing non-aqueous electrolyte is used in combination with the negative electrode including the negative electrode active material including the carbon composite particles, the capacity retention rate at 25°C increases as compared with that of the case where a FEC-free non-aqueous electrolyte is used, but the capacity retention rate at 45°C decreases (compare C1 with C2 and C3). Also, the amount of gas generated during high temperature storage increases accordingly as the FEC content is increased (compare C1 with C2 and C3). In contrast thereto, in the case where a non-aqueous electrolyte containing vinyl ethylene sulfite as the first component is used in combination with the negative electrode including the negative electrode active material including the carbon composite particles, the capacity retention rate at 45°C increases more significantly as compared with the capacity retention rate at 25°C (compare C1 with E3). In the battery E3 in which vinyl ethylene sulfite is used, the capacity retention rate at 45°C increases more significantly as compared with that in the case where FEC is used (compare C2 and C3 with E3). Also, unlike the case where FEC is used, in the case where vinyl ethylene sulfite is used, the amount of gas generated during high temperature storage decreases by an amount as much as 23% (compare C1 withE3).

Even in the case where a FEC-containing non-aqueous electrolyte is used in combination with the negative electrode including the negative electrode active material including the carbon composite particles, when the non-aqueous electrolyte further contains vinyl ethylene sulfite or the like as the first component, the capacity retention rate at 45°C can be improved, and the amount of gas generated during high temperature storage can be reduced significantly (compare C2 with E2, and compare C3 with E1). Particularly when the initial concentration of FEC is greater than 1 mass% (for example, 1.5 mass% or more, 2 mass% or more, or 3 mass% or more), the advantageous effects obtained by using the first component are exhibited remarkably, and higher effects are obtained as compared with those expected from the case where each of FEC and the first component is used alone, from which it is considered that a synergetic effect is obtained by using FEC and the first component in combination (compare C1, C3, and E3 with E1).

In the case where vinylene sulfate is used as the first component, in the same or similar manner as in the case where vinyl ethylene sulfite is used as the first component, the capacity retention rate at 25°C and the capacity retention rate at 45°C can be improved, and the amount of gas generated during high temperature storage can be reduced significantly (compare C3 with E4). In contrast thereto, among sulfur-containing cyclic esters, in the case where ethylene sulfite that is different from the first component is used, there is little effect of improving the capacity retention rate, and the amount of gas generated during high temperature storage increases significantly (compare C3 with C4, and compare C4 with E1 and E4). For this reason, it can be said that the effect of improving the capacity retention rate at 45°C and the effect of reducing the amount of gas generated during high temperature storage obtained in Examples are unique effects that can be obtained when the first component is used.

Also, in the case where only graphite particles are used as the negative electrode active material, even when a non-aqueous electrolyte that contains FEC and the first component is used, the capacity retention rate at 45°C decreases (compare C5 with C6). In contrast thereto, in the case where a non-aqueous electrolyte that contains FEC and the first component is used in combination with the negative electrode including the negative electrode active material including the carbon composite particles, the capacity retention rate at 45°C increases (compare C1 with E1). As described above, in the case where the negative electrode active material composed only of graphite particles is used and the case were the negative electrode active material including the carbon composite particles is used, the behavior of the capacity retention rate at 45°C is completely different between the case where a non-aqueous electrolyte that contains the first component is used in combination and the case where a non-aqueous electrolyte that contains the first component and the second component such as FEC is used in combination. Accordingly, it can also be said that the effect of improving the capacity retention rate at 45°C produced by using the first component (or the first component and the second component) is a unique effect that can be obtained when a negative electrode active material that includes carbon composite particles each including a Si phase is used.

In the case where a non-aqueous electrolyte containing the second component is used, from the viewpoint of ease of ensuring the effect of improving the capacity retention rate at 45°C and the effect of reducing the amount of gas generated during high temperature storage obtained by using the first component, for example, the mass ratio (b/a ratio shown in the table) of the second component to the first component is preferably 20 or less, and may be 15 or less, or 10 or less.

The present invention has been described in terms of the presently preferred embodiment, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

### [Industrial Applicability]

The non-aqueous electrolyte secondary battery according to the present disclosure is useful as a main power source for a mobile communication device, a portable electronic device, or the like. However, these are merely examples, and thus the application of the non-aqueous electrolyte secondary battery is not limited thereto.

### [Reference Signs List]

1: electrode group
2: positive electrode lead
3: negative electrode lead
4: battery case
5: sealing plate
6: negative electrode terminal
7: gasket
8: sealing cap

## Claims

1. A non-aqueous electrolyte secondary battery comprising:
a negative electrode that includes a negative electrode active material;
a separator;
a positive electrode that is provided to oppose the negative electrode with the separator interposed therebetween; and
a non-aqueous electrolyte,
wherein the negative electrode active material includes 3 mass% or more of a silicon-containing material,
the silicon-containing material includes carbon composite particles,
each of the carbon composite particles includes a carbon phase and a silicon phase dispersed in the carbon phase,
the non-aqueous electrolyte contains a 5- or 6-membered sulfur-containing cyclic ester compound that has a carbon-carbon unsaturated bond and a structure represented by -O-S(= O)n-O-, and
n is 1 or 2.

2. The non-aqueous electrolyte secondary battery in accordance with claim 1,
wherein the silicon-containing material further includes a silicon oxide.

3. The non-aqueous electrolyte secondary battery in accordance with claim 1 or 2,
wherein the sulfur-containing cyclic ester compound has at least one selected from the group consisting of a substituent that has the carbon-carbon unsaturated bond and the carbon-carbon unsaturated bond that constitutes a ring.

4. The non-aqueous electrolyte secondary battery in accordance with any one of claims 1 to 3,
wherein the sulfur-containing cyclic ester compound includes at least one selected from the group consisting of a vinyl ethylene sulfite compound, an allyl ethylene sulfite compound, and a vinylene sulfate compound.

5. The non-aqueous electrolyte secondary battery in accordance with any one of claims 1 to 4,
wherein the concentration of the sulfur-containing cyclic ester compound in the non-aqueous electrolyte is 5 mass% or less.

6. The non-aqueous electrolyte secondary battery in accordance with any one of claims 1 to 5,
wherein the non-aqueous electrolyte further contains a fluorine-containing cyclic carbonate.

7. The non-aqueous electrolyte secondary battery in accordance with claim 6,
wherein the mass ratio of the fluorine-containing cyclic carbonate to the sulfur-containing cyclic ester compound is 20 or less.

8. The non-aqueous electrolyte secondary battery in accordance with claim 6 or 7,
wherein the fluorine-containing cyclic carbonate includes fluoroethylene carbonate.

9. The non-aqueous electrolyte secondary battery in accordance with any one of claims 6 to 8,
wherein the concentration of the fluorine-containing cyclic carbonate in the non-aqueous electrolyte is 10 mass% or less.

10. The non-aqueous electrolyte secondary battery in accordance with any one of claims 6 to 9,
wherein the concentration of the fluorine-containing cyclic carbonate in the non-aqueous electrolyte is 0.01 mass% or more.
